# EUROPEAN PATENT SPECIFICATION

(11) **EP 0 243 653 B1**
(45) Date of publication and mention of the grant of the patent: **05.01.1994**
(21) Application number: 87104027.5
(22) Date of filing: 19.03.1987
(51) Int. Cl.: H01M 4/02, H01M 4/62, H01M 4/58, H01M 2/14

(54) **Cathodic electrode**
Kathodische Elektrode
Electrode cathodique

(30) Priority: 24.03.1986 US 843480; 24.03.1986 US 842973; 24.03.1986 US 843347; 15.08.1986 US 896690
(43) Date of publication of application: 04.11.1987
(73) Proprietor: W.R. Grace & Co.-Conn., New York, New York 10036 (US)
(72) Inventor: Anderman, Menahem, Boyds Maryland 20841 (US); Johnson, Steven Lloyd, Catonsville Maryland 21228 (US); Lundquist, Joseph Theodore, Jessup Maryland 20794 (US)
(74) Representative: UEXKÜLL & STOLBERG

(56) References cited:
- US-A- 3 351 495
- US-A- 3 457 113
- US-A- 3 898 099
- US-A- 4 320 185
- US-A- 4 416 915
- US-A- 4 529 672
- US-A- 4 550 064
- PATENT ABSTRACTS OF JAPAN, vol. 11, No. 240 (E-529)[2687], 6th August 1987; & JP-A-62 52 855 (SHIN KOBE ELECTRIC MACH. CO., LTD) 07-03-1987
- PATENT ABSTRACTS OF JAPAN, vol. 9, No. 110 (E-314)[1833], 15th May 1985; & JP-A-60 1753 (SHINKOUBE DENKI K.K.) 07-01-1985
- J. Electrochemical Society vol. 130(1983) p. 1107-1109

## Description

### BACKGROUND OF THE INVENTION

The present invention is directed to polymer bonded electrodes useful in a non-aqueous battery and to a battery system containing said electrodes. Further, the present invention is directed to highly filled TiS₂-polymer bonded electrodes useful in a non-aqueous battery and to a battery system containing said electrodes. Still further, the present invention is directed to a unitary microporous cathodic electrode-separator product having a electrochemically active and electrically conductive inner core and an inert outer portion.

Storage batteries have a configuration composed of at least one pair of electrodes of opposite polarity and, generally, a series of adjacent electrodes of alternating polarity. The current flow between electrodes is maintained by an electrolyte composition capable of carrying ions across electrode pairs. In addition to these active components, there must be an inert material separating the electrodes of opposite polarity. Separators have been used in many forms including grids, blocks, sheets and the like formed from nonconductive materials.

Non-aqueous batteries have certain distinct advantages over other types of storage batteries. They use, as anodes, light weight or alkali metals, such as lithium, lithium-aluminum alloys and the like which are at the far end of the electromotive series. These batteries have the potential for providing much higher gravimetric and volumetric energy densities (capacity per unit weight and volume, respectively) than other types of batteries, due to the low atomic weight of the metal and high potential for forming a battery in conjunction with suitable positive electrodes far removed from the light weight (alkali) metal electrode (the description herein will use batteries having lithium as the light weight metal anode although other light weight metals can be used) in the electromotive series. The battery can be formed in any conventional physical design, such cylindrical, rectangular or disc-shaped "button" cells, normally of a closed cell configuration.

The battery components of positive electrode, negative electrode and separator can be in the form of distinct alternating plates in a sandwich design or of a continuous spirally wound design as are well known. The anodic electrodes can be formed, for example, from lithium metal or its alloys on a support, such as a nickel coated screen. The electrolyte can be formed of a non-aqueous solvent or fused or solid electrolyte. Illustrative of known useful non-aqueous solvents include acetonitrile, tetrahydrofuran and its derivatives, propylene carbonate, various sulfones and mixtures of these solvents containing a light metal salt such as lithium salts as, for example, lithium perchlorate, iodide or hexafluroarsenate and the like. An additional, normally passive component of the battery is a separator membrane located between plates of opposite polarity to prevent contact between such plates while permitting electrolytic conduction. Separators are normally of the form of sheets which possess very low electronic conductivity.

Significant developments have been made in the fabrication of non-aqueous batteries. However, one of the major concerns is the lack of development of a suitable cathode in which the electrochemically cathodic material is present in the form of a porous, flexible, sheet material. The cathodic active material must be bonded into a unitary sheet by a material which is inert with respect to the other components of the battery as well as being inert and compatable to the active material. The bonding material must be capable of readily forming a uniform sheet. The resultant sheet must have the active material uniformly distributed throughout the length and breadth of the sheet as well as across its thickness to provide maximum effectiveness. The bonding material must be kept to very low amounts of the total sheet material or the cathodic active material will be encompassed by the material and thereby dramatically reduce the conductivity and activity of the resultant cathodic sheet product. Even though present in only small amounts the bonding polymer must be capable of maintaining the sheet integrity and provide resistance to fractures, spalling and disintegration attributable to the expansion and contraction forces encountered in charge-discharge cycling.

Polymer bonded electrodes presently known have a number of deficiencies which has limited their utility and, thereby limited the acceptance of an effective non-aqueous battery system. The presently known polymer-bonded electrodes are not capable of being mass produced by a reliable, cost-effective, non-aqueous process. In addition, the majority of known polymer-bonded electrodes exhibit flaking and disintegration when the formed sheet is further processed such as when applied to a current collector and/or during assembly into a battery.

A number of bonding polymers have been considered for and used in the fabrication of cathodic polymer bonded electrodes. The most widely used material at the present time is poly(tetrafluoroethylene), commonly referred to as PTFE or by the tradename Teflon®. PTFE bonded electrodes have certain drawbacks which limit their usefulness and ability to provide a highly effective product. For example, the chemical inertness of this polymer causes the fabrication of electrodes to be both difficult and laborious. Generally, it requires initially mixing the active material with an aqueous slurry of PTFE which is then doctored onto a surface and heated to high temperatures (250 - 400°C) to remove the water and cause bonding. The presence of water and the processing at high temperatures limits the active materials which can be used in forming the electrode product. For example, certain chalcogenides, in particular, titanium disulfide, are known to be unstable in the presence of water. In addition, there is concern that during fabrication residual water will remain and come in contact with the light metal anode such as lithium. Further, PTFE bonded sheets tend to flake and are not free standing unless large amounts of polymer are used. The sheets are conventionally bonded to a current collector screen by pressing them together at high temperatures. This process normally produces a rigid, brittle product which tends to crack and chip. Finally, a major defect of this known class of product is its non-uniformity both in distribution of active material and of porosity. This defect is inherently due to the processing techniques required, especially the evaporation of solvent from the materials causing non-uniformity across its thickness as well as from point-to-point on the sheet product. Patents illustrating formation of polymer bonded electrodes by this technology are U.S. 3,457,113; 3,407,096; and 3,306,779.

Some work has been done to form a product from dry tetrafluoroethylene suspensions to overcome the incompatibility problems associated with water but such products require sintering at very high temperatures (e.g. 400°C) which also limits the types of active fillers which can be used. Patents illustrating this known technology are U.S. 3,l84,339 and 3,536,537.

More recently polymer bonded electrodes have been formed from slurries of EPDM (ethylene-propylene-diene terpolymer) in an organic medium, such as cyclohexane (see "Elastomic Binders for Electrodes" by S.P.S. Yen et al., J. Electrochem. Soc., Vol. 130, No. 5, Pg. 1107). Other noncrystalline, elastomeric polymers, such as sulfonated ionomers, butyl rubbers and the like have also been used in forming electrodes by a slurry technique (See U.S. 4,322,317). The resultant electrode products formed in this manner exhibit greater elasticity and compatability with the other battery components. However, the defects of non-uniformity of product, poor control of porosity and pore size distribution remain a problem. In addition, electrodes made by this method exhibit severe loss of activity after being subjected to only a few charge/discharge cycles as noted by the low figure of merit reported in U.S. 4,322,317.

It is highly desired to be able to provide a polymer bonded electrode which is capable of being readily fabricated without being labor intensive. Further, it is desired to provide a polymer-bonded electrode which can be formed with a very high content of electrochemically active particulate material, can exhibit a high degree of uniformity, is a flexible material which can be readily formed into desired configuration and can maintain its integrity under the conditions encountered in a battery (including expansion-contraction of cycling). Finally, it is highly desired to provide a polymer-bonded electrode which is in the form of a sheet of controlled microporosity capable of permitting entry and mobility of electrolyte therein which can thereby increase the electrode's activity. In addition to the above, it is highly desired to be able to provide a polymer bonded electrode especially a TiS₂- polymer bonded electrode, which exhibits high charge density; which is capable of sustaining high discharge rates; and which is capable of exhibiting very low capacity loss upon charge-discharge cycling.

Upon initial consideration, it might be assumed that many binding materials could be used as alternatives to the small number of materials presently used and obtain the desired results. However, although there are a large number of polymers available as binders in many applications including as electrode binders, a selection of a specific binder is not obvious to the artisan when attempting to provide a chalcogenide, especially a TiS₂ filled cathodic electrode because of the many factors which influence the results one obtains with any particular binder. Among the major factors which influences the results obtained are: (1) the solubility of the binder in the organic electrolytes which are required in this application; (2) the chemical stability of the polymer at the electrode potential realizing that many cells are operated at different potentials; (3) the stability of the electrochemically active and electrically conductive materials used in combination with a particular binder and under the conditions needed for fabrication; (4) the ability of the polymer to bind the particulate material into a unitary structure at very low concentrations in order to provide a cathodic electrode with good performance; (5) the ability and ease of obtaining a uniform distribution of the binder with the active material of the electrode; (6) the ability of the polymer to maintain a stable cathodic electrode capable of undergoing a multiplicity of charge-discharge cycling; (7) the number and ease of the steps required to obtain the desired cathodic electrode; and (8) the safety, the availability of material and the cost. Thus, selection of a polymer for use in forming a high performance electrode containing metal chalcogenides has been a difficult task because of the above factors which impose severe restrictions and limitations.

Applicants disclose herein polymer bonded electrodes including the preferred TiS₂ electrodes which, contain ultrafine conductive carbon particulate to enhance the electrical conductivity of the resultant sheet. However, the use of such high surface area conductive carbon reduces the charge density of the electrode and thus reduces the capacity of the battery system. In addition, in some instances the presence of carbon may cause electrolyte decomposition which shortens the life of the battery. Applicants also herein describe sheet products providing a cathode having high electrical conductivity and electrochemical activity without the difficulties associated with the addition of conductive diluents, such as carbon.

Finally, an important component of a battery is the separator. This component is normally in the form of a separate sheet material inserted between electrodes of opposite polarity to prevent their contacting one another. In batteries, such as presently described, the separator must be inert with respect to the other components, be capable of permitting electrolytic conduction through the separator and, in secondary batteries, it must be able to inhibit and prevent dendritic shorting. Because of the types of polymers used in forming the cathodic electrodes, especially inert Teflon®, the separator has been a separate component. This causes additional effort in assembling the cell. Further, its effectiveness is impaired as the separator tends to shrink or migrate thus allowing exposed areas of electrodes. Finally, such individual separator membranes do not provide a means of effectively inhibiting dendrite formation and shorting therefrom. Normally, the edge portions of the electrodes remain exposed to permit dendrite shorting. To overcome this, it has been proposed that the light metal electrode be encapsulated by a separator type envelope. However, this has many complications due to the high reactivity of the light metal, especially lithium.

It is highly desired to form a sheet product suitable for use in forming a cathodic electrode product composed of a polymer-bonded cathodic electrode which is integrally bonded to and encompassed by a composition capable of functioning as an inert microporous separator membrane. It is further highly desired that the sheet product and the cathodic electrode product have good mechanical integrity, be flexible and capable of being formed into various configurations required for different battery designs. It is still further highly desired that cathodic electrode product permit high utilization of the active material and maintain the high activity after subjection to a multiplicity of charge/discharge cycles.

It has now been discovered that a cathodic polymer bonded electrode suitable for use in non-aqueous batteries can be readily formed in a manner which provides a superior electrode and overcomes the processing problems associated with Teflon® and other presently used polymers as described above.

### Summary of the invention

The present invention is directed to a self-standing microporous sheet product having first and second major surfaces and a thickness of less than 0.127 cm (50 mils) comprising with the proviso that no fibrillated polymer is present
(a) from 70 - 98 weight percent of particulate material selected from electrochemically active chalcogenide and electrically conductive material and mixtures thereof alone or together with other metals; and
(b) from about 2 - 30 weight percent of a high-density polyethylene having a weight average molecular weight of from about 150 000 to about 5 000 000; and
(c) from 0 to 5 weight percent of an organic plasticizer for said polyethylene;
said sheet having a void volume of at least about 10 volume percent and being capable of exhibiting conductivity of at least about 0.1 S/cm (reciprocal ohm/cm) when placed in an electrical circuit.

In preferred embodiments in the sheet product the particulate material is TiS₂ and/or the weight average molecular weight of the polyethylene ranges from 200 000 to 500 000; up to about 30 weight percent of said particulate material is composed of a conductive carbon black having an average particle size of from about 1 to 100 nm and the remainder of said particulate material is selected from at least one metal chalcogenide having a metal selected from titanium, zirconium, hafnium, niobium, manganese, copper, iron, tantalum, chromium, vanadium or mixtures thereof; the at least one metal chalcogenide or the major chalcogenide is TiS₂ having an average particulate size of 30 µm or less.

In further preferred embodiments
(a) said particulate is present in from about 90 to 94 weight percent and is composed of a metal chalcogenide having an average particle size of less than about 30 µm;
(b) said polyethylene is present in from about 6 to 10 weight percent and has a weight average molecular weight of from about 200 000 to 500 000; and
(c) said organic plasticizer is present in from 0 to 2 weight percent;
said sheet product being substantially homogeneous, microporous and having a void volume of from 15 to 25 weight percent and being capable of exhibiting conductivity of at least 0.15 S/cm (reciprocal ohm/cm); and/or
the sheet product forms a unitary microporous structure and wherein said first major surface of the sheet product is covered with a substantially homogeneous composition composed of from about 7 to 50 weight percent of a polyolefin having a weight average molecular weight of at least about 100 000, from about 50 to 93 weight percent of a filler having a mean particle size of from about 0.01 to 10 µm and is inert with respect to a battery system in which the sheet product is to be used and from 0 to about 15 weight percent of an organic plasticizer for said polyolefin.

In the sheet product the particulate material may have a mean particle size of about 25 µm or less and may be composed of from about 70 to 100 weight percent of at least one metal chalcogenide of a metal selected from titanium, zirconium, hafnium, niobium, tantalum, vanadium and mixtures thereof and from 0 to about 30 weight percent of a conductive carbon black, the metal chalcogenide may be TiS₂.

Furthermore in this sheet product the polyethylene may be present in 2 - 15 weight percent and may have a weight average molecular weight of from about 200 000 to 500 000, the particulate material may be present in 85 - 98 weight percent and may be at least about 70 weight percent titanium disulfide, the plasticizer for the polyethylene may be present in from 0 - 5 weight percent and may be selected from a petroleum oil, and wherein the composition covering the first major surface may be composed of polyolefin having a weight average molecular weight of from 150 000 to 500 000, an inert filler may be selected from titania, alumina, silica and polyolefin plasticizer composed of a petroleum oil. The particulate material may be TiS₂.

The present invention is also directed to an electrode suitable for use in a non-aqueous battery comprising at least one of such sheet products and a current collector composed of a conductive material, said collector being in intimate contact with said at least one sheet product, and is further directed to a primary or secondary battery comprising at least one pair of electrodes of opposite polarity and an electrolyte, wherein the anodic electrode is composed of an alkali metal or alloy thereof and the cathodic electrode consists essentially of said electrode product comprising said sheet product.

Additionally it is directed to a process for forming a microporous sheet product suitable for use as a cathodic electrode comprising;
(a) forming a substantially uniform mixture comprising from about 3 to 30 volume percent of polyethylene having a weight average molecular weight of from about 200 000 to about 500 000, from about 27 to about 76 volume percent of particulate metal chalcogenide material having an average particle size of less than about 20 µm and from about 20 to 70 volume percent of plasticizer for the polyethylene;
(b) shaping the substantially uniform mixture into an initial sheet;
(c) removing a portion of said plasticizer from the initial sheet to form a porous intermediate sheet having from 10 to 22 volume percent of plasticizer;
(d) compressing the intermediate sheet to provide a substantially nonporous compressed intermediate sheet; and
(e) removing substantially all of the plasticizer from said compressed intermediate sheet to produce a microporous sheet product.

In said process the uniform mixture of step (a) may comprise 12 to 20 volume percent of polyethylene, from about 40 to 55 volume percent of the chalcogenide and 48 to 25 volume percent of plasticizer and the chalcogenide may be TiS₂.

### Detailed Description of the Invention

The polymer bonded electrode of the present invention is in the form of a thin sheet which is required to be formed from a homogeneous admixture of polyethylene, a plasticizer for the polyethylene, and particulate material having a combination of electrochemical active and electrically conductive properties as are described herein below.

The polymer electrode of the instant invention is formed through a series of precursor materials. Generally, a uniform admixture is initially formed of polymer, plasticizer and particulate material. The admixture is capable of exhibiting sufficient flow and rheological characteristics to permit the admixture to be readily processed and shaped at relatively low temperatures (i.e. 25°C-170°C). An initial sheet is formed from the admixture. The plasticizer component is then removed from the initial sheet. This removal normally occurs subsequent to the forming of a laminate in which a metal screen (a current collector) is laminated to a sheet or sandwiched between two sheets to provide an electrode product. The final electrode product, having had the plasticizer component substantially removed, is a highly filled (normally 85 wt.% or greater) product useful as a polymer bonded electrode.

The present invention requires the utilization of polyethylene of high density. The polyethylene should have a weight average molecular weight of at least about 150,000 and is preferably selected from higher molecular weights such as from about 200,000 to 5,000,000. The most preferred polyethylenes are homopolymers of high molecular weight such as of a weight average molecular weight of 200,000 to 500,000. The term "polyethylene", as used herein and in the appended claims, shall mean high density polyethylene homopolymers or polyethylene copolymers in which copolymer is formed from olefinic monomers such as ethylene, propylene, butene-1, acrylate and the like with the major (at least 80 percent) olefinic monomer being ethylene.

The polymer component used in forming the subject electrode product can be comprised of a mixture of a high molecular weight polyethylene and a low molecular weight polyethylene. The mixture can be formed from about 5 - 95 weight percent of a high molecular weight polymer and a corresponding 95 - 5 weight percent of a low molecular weight polymer. The term "high molecular weight polymer" is intended to refer to a polymer having a weight average molecular weight of at least 250,000 and "low molecular polymer" refers to a polymer having a weight average molecular weight of from about 100,000 to 250,000.

The plasticizer of the instant composition must be present in the initial formulating and processing to form an initial sheet product, as more fully described below. The plasticizer provides the means of fabricating the composition to a uniform consistency and to aid in inducing and controlling the degree of porosity, the pore size distribution and uniformity of porosity throughout the resultant sheet product.

Plasticizers suitable for the instant invention are compounds which are capable of plasticizing polyethylene under the elevated temperature and/or pressure process conditions, are substantially inert with respect to the particulate material used herein, and are substantially soluble in an organic solvent which is a non-solvent with respect to the polymer component described above and the particulate material described below which are used in forming a particular composition. Representatives of such plasticizers are organic esters, such as sebacates, phthalates, stearates, adipates and citrates; epoxy compounds such as epoxidized vegetable oil; phosphate esters such as tricresyl phosphate; hydrocarbon materials such as petroleum oil including lubricating oils and fuel oils, hydrocarbon resin and asphalt and pure compounds such as eicosane; coumarone-indene resins and terpene resins; tall oil and linseed oil. The preferred plasticizers are hydrocarbon materials and most preferred plasticizers are selected from petroleum oils. The plasticizer is generally substantially free of water (anhydrous) and, therefore, compatable with the subject battery system.

The organic plasticizer used herein aids in fabricating the sheet product and in imparting microporosity to the resultant sheet. The void volume of the resultant sheet will be directly dependent upon the amount of plasticizer used to form the initial composition and the amount of plasticizer extracted to provide the final sheet product. Void volumes of the final sheet product may range from about 15 volume percent to about 60 volume percent with from about 25 to 40 volume percent being preferred. Higher ranges are normally acceptable for sheet products having higher cross-sectional dimensions. The sheets void volume is of a microporous character which generally have narrow distribution and are of low mean diameter (i.e. 0.05 to 0.5 µm (microns)) and can be determined by standard mercury intrusion techniques.

The particulate material required in forming the present admixture and the resultant sheet is composed of the cathodic electrochemically active and electrically conductive materials. They must be in particulate form. Smaller particle size material (such as a mean particle size of about 25 microns or less and preferably less than 10 µm (microns)) is preferred to enhance intimate contact between the particles of electrochemically active material contained in the resultant electrode. The term "electrochemically active" refers herein and in the appended claims to the ability of a material to enter and participate in a redox reaction during the operation and in the environment of an electrochemical cell. The term "electrically conductive" refers herein and in the appended claims to the ability of a material to exhibit low resistance to the passage of electrons.

The particulate material used herein will be selected from the chalcogenide compounds described below alone or with electrically conductive diluent also described below. The materials must be such as to provide an electrode sheet product capable of exhibiting an overall conductivity of at least about 0.1 S/cm (reciprocal ohm-cm). When a cathodically-active material has low electrical conductivity (the majority of the chalcogenide exhibit less than about 0.001 S/cm (reciprocal ohm-cm)) they must be used in combination with conductive diluent, as described below.

The particulate material can be one or more of the chalcogenide compounds which have the appropriate crystal structure to exhibit electrical conductivity. The compounds are selected from sulfides, oxides, selenides, and tellurides of titanium, zirconium, hafnium, niobium, manganese, copper, iron, tantalum, chromium, and vanadium. In general, such chalcogenides contain about 1.8 to about 3.2 atoms of the chalcogen per metal atom. Advantageously, when forming a secondary battery the cathodic electrode is preferably selected from a chalcogenide of titanium and most preferably electrochemically active and electrically conductive titanium disulfide. When forming a primary battery the preferred chalcogenides are formed from vanadium, such as V₂O₅, iron and copper especially the sulfides of iron and copper. Also, among the chalcogenides, those which contain about 1.8 to about 2.1 atoms of chalcogen per metal atom, commonly referred to as the dichalcogenides, are preferred.

Examples of cathode-active materials which may be useful and which are selected from the above-mentioned chalcogenides are titanium disulfide, zirconium disulfide, hafnium disulfide, niobium triselenide, tantalum disulfide, vanadium disulfide, vanadium diselenide and vanadium ditelluride as well as vanadium oxide such as V₃O₈ and V₅O₁₃. Also included are the chalcogenides having more than one of the mentioned metals, e.g., V_{o.25}Ti_{o.75}S_{2.o}. Also included are those chalcogenides having metals other than those described above included, e.g., vanadium iron disulfide. Lastly, it should be noted that while the trichalcogenides and dichalcogenides are described, the present invention is not limited thereto and may include, for example, the pentachalcogenides and the like.

It has been unexpectedly found that by using particulate material of the particle size herein described one obtains an electrode of high energy density and stability. The mean particle size of the material should be 30 µm (microns) or less preferably 20 µm (microns) or less and most preferably 15 µm (microns) or less. Smaller particle size material is preferred to enhance intimate contact between the particles.

In a preferred embodiment, the polymer-electrodes of the present invention are formed with the particulate material, titanium disulfide. In addition to the titanium disulfide, the particulate material can also contain minor amounts of (less than about 20 weight percent) cathodic-active particulate material selected from sulfides, selenides and tellurides of vanadium, hafnium, niobium, zirconium or tantalum as well as selenides and tellurides of titanium and oxides of vanadium, or chromium and mixtures thereof. The preferred resultant polymer bonded electrode has titanium disulfide as the sole cathodic electrochemical active material. Examples of cathode-active materials which may be used in combination with titanium disulfide, are zirconium disulfide, hafnium disulfide, niobium triselenide, tantalum disulfide, vanadium disulfide, vanadium diselenide and vanadium ditelluride. Also included are materials having more than one of the mentioned metals, e.g., V_{0.25} Ti_{0.75} S_{2.0}. Also included are those materials having additional metals other than those described above included e.g. vanadium iron disulfide, sodium titanium disulfide and lithium titanium disulfide.

The particulate chalcogenide may further comprise minor amounts (up to about 30 weight percent preferably up to about 20 weight percent) of conductive diluent such as high surface area conductive carbon black. The diluent is normally of ultrafine particle size of from about 1 to 100 nm (millimicrons) and have a (BET) surface area of at least 40 m²/g, preferably at least 70 m²/g and most preferably from 70 to 2000 m²/g. The carbon can serve several roles to enhance the subject electrode. In instances where the particulate chalcogenide used has good electronic conductivity, the carbon merely acts as an electrical conductive bridge between particles of chalcogenide to further enhance the total properties of the resultant electrode. Where the chalcogenide has poor electronic conductivity i.e. V₂O₅ (high resistance) the conductive diluent provides a means for carrying the electron to the current collector from the electrochemically active chalcogenide site.

The particulate material, either singly or in combinations as described herein, must be capable, when placed in the present polymer matrix, of causing the resultant electrode sheet product of this invention to exhibit an overall electrical conductivity of at least about 0.1 (preferably 0.3) S/cm (reciprocal ohm-cm). It is known that most materials which are capable of exhibiting cathodic activity have normally been found to provide very low conductivity of, for example, less than 0.001 S/cm (reciprocal ohm-cm). in prior art products.

In addition to the above described components, the initially formed admixture may further contain conventional stabilizers, antioxidants, wetting agents, processing aids or mixtures thereof. Representative of stabilizers are 4,4-thiobis(6-tertbutyl-m-cresol) sold commercially under the tradename "Santonox"® and 2,6-ditert-butyl-4-methylphenol sold commercially under the tradename "Ionol"®. Examples of known commercially available wetting agents include sodium alkyl benzene sulfonate, sodium lauryl sulfate, dioctyl sodium sulfosuccinate, and isooctyl phenyl polyethoxy ethanal. Processing aids include stearates, graphite and the like.

The above-described components can be readily formed into a substantially homogeneous admixture. The initial admixture should be formed by blending from about 5 to 35 (preferably 5 - 20) volume percent polymer, from about 25 to 75 (preferably 40 to 60) volume percent of particulate material and from about 20 to 50 volume percent of polymeric plasticizer.

The blending of the components can be readily accomplished by conventional means such as by initially mixing at room temperature in a blender and then in a Banbury, Brabender or sigma blade mixer or the like at moderate (about 25 to about 170°C, preferably from about 120 to about 160°C) temperatures. The blending and processing is preferably done under dry conditions to avoid water pick-up by the materials.

It has been found that even though the present product has extremely high particulate content, the admixtures required by the present invention exhibit rheological properties which permit them to be readily shaped and formed into thin sheet products of less than about 0.127 cm (50 mils), preferably less than 0.051 cm (20 mils). It must be understood that the particular thickness can be customized by the artisan based on the battery design and its acceptable drain rate. Sheet products and electrodes therefrom can be made of less than 0.0127 cm (5 mils) and even less than 0.008 cm (3 mils) thickness. Sheet products made by presently known conventional techniques can not be formed of such thin dimensions and maintain good mechanical properties as is attainable by sheet products of the present invention. The term "sheet" as used herein and in the appended claims refers to a shaped product having extensive length and breath dimensions and of thin cross-section and which may have major surfaces which are substantially flat or of a predetermined design. The initial sheet product can be readily formed from the admixture by subjecting the admixture to extrusion, calendering, injection molding or compression molding processing. All of these processing means are capable of producing the initial sheet in large volume using low labor involvement. The most preferred method is extrusion of the admixture using a conventional extrusion apparatus to continuously provide initial sheet product.

The forming of the initial sheet (a sheet having high levels of plasticizer therein) can be readily accomplished at moderate operating conditions, including low temperatures of from about 25 to 175°C and preferably from about 120 to 160°C. Such temperatures allow formation of sheet product using components normally deemed unsuitable under known slurry processes. Further the present process provides a sheet which is freestanding and has substantial uniform distribution of particulate material throughout its length and breadth dimensions as well as across its cross-sectional dimension.

The initially formed sheet can be readily made into a suitable cathodic electrode by laminating a conventional current collector with at least one sheet of the present invention. The plasticizer component can be extracted, as described below, prior or subsequent to lamination with the current collector. It is preferred to initially form the laminate structure of at least one sheet with a suitable current collector and then extract the plasticizer material.

The current collector is normally a screen, grid, expanded metal, woven or non-woven fabric or the like formed from efficient electron conductive materials such as carbon, or metals such as copper, aluminum, nickel, steel, lead, iron or the like. The current collector, when laminated to the final sheet product (a sheet substantially comprising particulate material bonded by very low amounts of polyethylene) of the present invention, provides a low electronic resistance path between the active material and the battery terminal.

The sheet product, with or without the presence of plasticizer, is a pliable and moldable material which can be readily laminated to the collector screen by concurrently passing a screen and at least one sheet through a set of nip rollers or the like to press (under low pressure and preferably at moderate temperatures of about 25 to 170°C) to produce a laminate product. It is preferred that the laminate be of a configuration of a screen sandwiched between (and thereby embedded in) two sheets although a laminate of a single sheet and single screen may be desired in certain applications. The laminate can be most readily formed by utilizing an initial sheet product immediately after its production to utilize the sheet in its elevated temperature state.

The plasticizer contained in the initial formed sheet should be substantially completely removed by means of extraction using suitable solvent. The composition of the resultant electrode will depend upon the degree of extraction of the plasticizer. The plasticizer can be substantially completely removed, leaving a microporous polymeric sheet product which is highly filled with cathodic active material. The resultant sheet product exhibits good physical properties and a high degree of microporosity. The exact degree of microporosity is induced and regulated to a large degree by the amount of plasticizer used and extracted. The microporosity character of the resultant polymer bonded electrode provides a means to permit the electrolyte to be in intimate contact with a very high percentage of the particulate material. It is believed, although not meant to be a limitation on the present invention, that the microporous structure of the sheet permits the particles residing in the interior of the sheet to be more active.

The procedure for extraction of the plasticizer from a sheet product is well known and is not meant to form a part of the present invention, per se. A single stage extraction can be used. The solvent or extraction conditions should be chosen so that the polyolefin and particulate material are essentially insoluble. For example, when petroleum oil is to be extracted from the formed sheet, the following solvents are suitable; chlorinated hydrocarbons, such as trichloroethylene, tetrachloroethylene, carbon tetrachloride, methylene chloride, tetrachloroethane, etc., as well as hydrocarbon solvents such as hexane, benzene, petroleum ether, toluene, cyclohexane, gasoline, etc. Aqueous solvents should not be used.

The extraction temperature can range anywhere from room temperature up to the melting point of the polyolefin as long as the polyolefin does not dissolve. The temperature can be maintained such that all components remain stable and are not adversely effected.

The time of the extraction will vary depending upon the temperature used and the nature of the plasticizer or filler being extracted. For example, when a higher temperature is used, the extraction time for an oil of low viscosity can be a very short time of up to only a few minutes, whereas if the extraction is performed at room temperature, the time requirement will be greater.

The final composition of the polymer-bonded electrode sheet product will depend upon the original composition and the degree of extraction of the plasticizer from the sheet product. The extracted sheet normally has from about 2 to 30 weight percent polyethylene, about 70 to 98 weight percent particulate material, and from about 0 to 5 weight percent plasticizer. The more preferred electrode comprise a mixture of from 4 to 15 weight percent polyolefin, 85 to 96 weight percent particulate material, and from 0 to 3 weight percent plasticizer.

In a preferred embodiment, 8 weight percent polyethylene, 71 weight percent particulate material, and 21 weight percent plasticizer are blended together, extruded to provide a flat sheet and then sufficient plasticizer is extracted to provide a finished electrode sheet composed of 10 weight percent polyolefin, 89 weight percent particulate material, and 1 weight percent plasticizer.

### Preferred Embodiment I

A preferred polymer bonded sheet product suitable for use as a cathodic electrode in non-aqueous batteries is a microporous sheet composed of a specific combination of components and amounts of from 6 - 10 weight percent polyethylene having a molecular weight of 200,000 to 500,000, 90 - 94 weight percent of titanium disulfide particulate material and from 0 to 2 weight percent of a plasticizer for the polyethylene; the sheet having a void volume of from 15 to 25 percent. The microporous sheet is not required to contain conductive diluent such as carbon to achieve the highly effective product.

The formed electrode exhibits high charge density, is capable of sustaining high discharge rates and is capable of exhibiting very low capacity loss upon charge-discharge cycling.

The preferred embodiment requires the utilization of polyethylene of high density which has a weight average molecular weight of 200,000 to 500,000. Polyethylene homopolymers are most preferred.

Suitable organic plasticizers used herein are the same as described herein above. They are used herein to aid in fabricating the sheet product and in imparting microporosity to the resultant sheet. The void volume of the resultant sheet will be directly dependent upon the amount of plasticizer contained in the intermediate sheet prior to subjecting the sheet to compression and to the amount of plasticizer extracted therefrom to provide the final sheet product. Void volumes of the final sheet product may range from 15 to 25 volume percent with from about 15 to 22 volume percent being preferred. Electrodes with higher ranges of void volume have been found to exhibit much higher capacity loss. The sheets void volume is of a microporous character which generally have narrow pore size distribution and are of low mean diameter (i.e. 0.01 to 0.5 µm (microns)) and can be determined by standard mercury intrusion techniques.

The particulate material required in forming the present admixture and the resultant sheet is composed of the cathodic electrochemically active and electrically conductive titanium disulfide. The titanium disulfide must be in particulate form. The mean particle size of the material should be 30 µm (microns) or less and preferably 15 µm (microns) or less. Smaller particle size material is preferred to enhance intimate contact between the particles of electrochemically active material contained in the resultant electrode. It has been unexpectedly found that by using titanium disulfide and polyethylene in the amounts and of the type described hereinabove in an electrode having the particular void volume of from 15 to 25 volume percent one obtains an electrode which can sustain its capacity over a large number of charge-discharge cycling.

In addition to the above described components, the initially formed admixture may further contain conventional stabilizers, antioxidants, wetting agents, processing aids or mixtures thereof as described herein above.

The above-described components can be readily formed into a substantially homogeneous admixture. The initial admixture should be formed by blending from about 3 to 30 (preferably 12 to 20)) volume percent polymer, from about 27 to 76 (preferably 40 to 55) volume percent of TiS₂ and from about 20 to 70 volume percent of polymeric plasticizer. The blending of the components can be readily accomplished by conventional means as described herein above.

The initially formed sheet can be formed into a final sheet product suitable for use as a cathode through the formation and processing of an intermediate sheet product. The formed initial sheet, as described hereinabove contains a very high percentage of plasticizer. Removal of substantially all of the plasticizer would provide a sheet product highly loaded with TiS₂ and having a large void volume. Such sheet products do not exhibit the ability to sustain its capacity over a large number of charge-discharge cycling. However, when the final sheet is formed as described herein below, one unexpectedly achieves the desired product. Such a final sheet can be achieved by processing an initially formed sheet into an intermediate sheet having from about 10 to 22 volume percent plasticizer therein. Such an intermediate sheet can be formed by a variety of manners such as by (a) removing a portion of the plasticizer contained in the initial sheet to reduce the plasticizer content to between 10 and 22 volume percent; (b) removing substantially all of the plasticizer contained in the initial sheet and then causing a fixed amount of plasticizer to be absorbed into the sheet to provide an intermediate sheet having plasticizer content of from 10 to 22 volume percent; or (c) forming the initial sheet from mixtures of a first and a second plasticizer which have mutually exclusive solubility in two solvents useful for extraction, removing the first plasticizer such as by extraction or the like with a solvent which is a substantial non-solvent for the second plasticizer therein to thus provide an intermediate sheet having from 10 to 22 volume percent of the second plasticizer The intermediate sheet is then compressed such as by passing the sheet through nip rollers or the like to cause the sheet to be substantially nonporous. The compressed intermediate sheet is then subjected to extraction or the like to remove substantially all of the plasticizer contained in the intermediate sheet to provide a resultant sheet product having 6 to 10 weight percent polyethylene, 90 to 94 weight percent TiS₂ and from 0 to 2 weight percent plasticizer as described hereinabove.

The formed sheet, either as the initial, intermediate or final sheet, can be readily made into a suitable cathodic electrode by laminating a conventional current collector with at least one sheet of the present invention. The plasticizer component can be extracted, in the same manner as described above either prior or subsequent to lamination with the current collector. It is preferred to form the laminate structure of at least one sheet with a suitable current collector prior to extraction of all of the plasticizer material. One preferred mode is to form the laminate structure during the compression of the intermediate sheet, as discussed above.

The sheet product, with or without the presence of plasticizer, is a pliable self supporting and moldable material which can be readily laminated to the collector screen in the manner described above. The final product, having had the plasticizer component substantially completely removed, is composed of from 6 to 10 weight percent of polyethylene and of from 90 to 94 weight percent TiS₂. The resultant product has a void volume of from 15 - 25 percent and is useful as a polymer bonded electrode.

### Preferred Embodiment II

Another preferred embodiment of the subject invention is directed to a unitary microporous chalcogenide (preferably TiS₂) cathodic electrode-separator product. It shall be seen that the resultant product shall have an inner core having an electochemically active and electrocally conductive composition substantially as described for the sheet products above and, in addition, shall have outer surfaces which are inert with respect to the battery system but which permits electrolytic passages and prevents dendristatic formation.

For clarity, the electrode-separator product of the present invention shall be described herein using certain terms which shall have the following definitions:
"sheet" or "membrane" shall mean a broad substantially planer material having major surfaces and edges defining its length, breadth and thickness. The sheet may be inert or passive with respect to an electrochemical reaction or may be formed with electrochemically active and electrically conductive material(s).
"First sheet" or "core material" shall, refer to a composition containing a high percentage of cathodic electrochemically active and electrically conductive particulate material or mixture of materials.
"Second sheet" or "outer surface material" shall refer to a composition which is substantially inert and passive with respect to the electrochemical reaction of a light metal containing battery cell.
"Sheet product" shall with respect to the electrode-separator product, refer to a unitary sheet material formed from at least one first sheet and at least one second sheet.
"Electrochemically active" shall refer to material which is capable of undergoing redox reaction with an alkali metal, especially Li, (a Group 1A metal of the Periodic Chart of Elements) under the conditions encountered by a battery cell in which the material is contained.
"Electrically conductive" or "electronically conductive" shall refer to material which is capable of exhibiting electronic conductivity of at least 10⁻² S/cm (ohm⁻¹ cm⁻¹).
"Current collector" shall mean a screen, foil, grid, web, woven or non-woven fabric or the like formed from an efficient electronically conductive material such as carbon or a conductive metal.
"Electrode product" shall with respect to the electrode-separator product, refer to mean a unitary, microporous sheet having a core formed from a composition of at least one first sheet, at least one current collector in intimate contact with the composition of the first sheet and each major surface of the unitary microporous sheet composed of a composition of a second sheet which is in intimate contact and bonded to the first sheet composition.

The first sheet or core of the subject cathodic electrode is generally formed by initially blending a uniform admixture of polyethylene, plasticizer for the polyethylene and particulate material composed of chalcogenide material alone or with other particulate material, as described hereinabove. The specific descriptions given above for the chalcogenide sheet product and for the TiS₂ sheet product (preferred embodiment I) are applicable in describing the components of the first sheet herein.

The components used to form the first sheet can be readily formed into a substantially homogeneous admixture by initially blending from about 5 to 35 (preferably 5 - 20) volume percent polymer, from about 25 to 75 (preferably 40 - 60) volume percent of particulate material and from about 20 to 50 volume percent of polymeric plasticizer. The amounts of each component can be adjusted by the formulator to provide sufficient plasticizer to enhance processability and provide for desired microporosity while limiting the polymer-particulate ratio to provide a resultant sheet having very low ratio of polymer to particulate material. The first sheet after removal of plasticizer, as described below, should have a composition of from 2 - 30 (preferably 4 - 15) weight percent polyethylene; from 70 - 98 (preferably 85 - 96) weight percent electrochemically active and electrically conductive particulate material; and from 0 - 5 (preferably from 0 to 2) weight percent of plasticizer for the polyethylene.

A second sheet or outer surface material of the subject electrode is formed from an initial blend of a polyolefin, an inert filler and a plasticizer for the polyolefin. The polyolefin is preferably high density polyethylene or a polypropylene. The most preferred material is a polyethylene which is the same as or similar to that used in forming the first sheet of the same resultant sheet product. The polyolefin should have a weight average molecular weight of at least 100,000, preferably from 150,000 to 2,000,000 and most preferably from 150,000 to 500,000. The polyolefin can be a homopolymer or copolymer formed from a mixture of hydrocarbon olefinic monomers or with other olefinic monomers such as acrylic acid or esters. Representative of polyolefins which may be used are polyethylene, polypropylene, polybutene, ethylene-propylene copolymer, ethylene-butene copolymer, ethylene-acrylic acid copolymer and the like. Further, the polyolefin can be a mixture of two or more polyolefins of similar or different weight average molecular weight. For example the mixture can be composed of a high (greater than 500,000) and a low (100,000 - 500,000) molecular weight polymers.

The plasticizer for the polyolefin of the second sheet must be an organic material which is substantially free of water (anhydrous). Examples given above with respect to the first sheet are applicable here. It is preferred that the second and first plasticizers have similar solubility characteristics. That is that they are soluble in a common organic solvent which is a non-solvent and inert with respect to the other components of the resultant sheet product.

The second sheet product should contain a filler which is inert and passive with respect to the other components of the resultant sheet product and passive with respect to the electrochemical reaction of a non-aqueous battery cell, such as a lithium battery. Examples of suitable inert and passive filler material include metal oxides such as those of silicon, aluminum, calcium, magnesium, barium, iron, zinc and tin; minerals such as mica, attapulgite, kaolite, talc, deatomaceous earth and the like; precipitated metal silicates, such as calcium silicate and aluminum polysilicate; glass particles and the like. The most preferred materials are selected from titania, alumina and silica. It is preferred that the inert materials should have a particle size of from about 0.01 to about 10 µm (microns) in diameter and have a surface area of from about 100 to 4000 m²/cm³ with from about 100 to 500 m²/cm³ being preferred.

The components of the second sheet are present in the initial admixture in from about 5 to 35 (preferably 10 - 20) volume percent polyolefin, from about 25 to 70 (preferably 30 - 60) volume percent of inert filler, and from about 20 to 60 (preferably 30 - 50) volume percent of plasticizer. The resultant sheet after removal of plasticizer is a substantially homogeneous composition of from 7 - 35 weight percent polyolefin, from 50 - 93 weight percent filler and from 0 - 15 weight percent plasticizer.

The initially formed admixture for forming each first and second sheet may further contain conventional stabilizers, antioxidants, wetting agents, processing aids or mixtures thereof as described for the chalcogenide sheet products herein above.

Each of the first and second sheets can be formed in substantially the same manner as has been described as applicable to form the chalcogenide sheet product. Each admixture can be initially shaped and formed into thin sheets of less than about 0.127 cm (50 mils) and preferably less than about 0.051 cm 20 mils. The total thickness of the resultant electrode product should not exceed about 0.152 cm (60 mils). In a preferred embodiment, a first sheet and a second sheet can be concurrently formed by coextrusion and placed in intimate contact through the use of nip rollers or the like to form a unitary sheet product composed of one first sheet and one second sheet. It is preferred that the first sheet and second sheet be combined into a unitary sheet product prior to extraction of the plasticizer(s) used. The formation can be readily accomplished at moderate operating conditions, including low temperatures of from about 25 to 175°C. These conditions permit utilization of components normally deemed unsuitable in forming cathodic electrodes by presently known methods.

The sheet product described hereinabove can be used in forming a unique cathodic electrode product suitable for use in a non-aqueous battery system. The sheet product must be placed in contact with a conventional current collector in a manner to cause the first sheet component of the sheet product to be in intimate contact with the current collector. Contacting of the collector with the sheet product is normally done by pressing or passing the materials through nip rollers or the like to cause the collector to be sufficiently embedded in the first sheet component to remain in intimate contact thereafter. It is preferred to embed the current collector in the first sheet prior to further contact with a second sheet components.

The current collector can be positioned to be in contact with a first sheet of a sheet product described above for use as the single cathodic electrode of a cell or can be positioned between two first sheets or two sheet products so that the first sheet of each sheet product is in face to face and in intimate contact with the collector. In both cases the resultant sandwiched product will thus have a second sheet on each exposed major surface. Alternately, a single sheet product and a single second sheet can have a current collector placed between them (again with the collector being adjacent to the first sheet of the sheet product) and pressed together to form a sandwiched product.

The plasticizer component of each sheet can be extracted, as described below, from each individual sheet, from each sheet product or subsequent to the lamination of the sheet product with a current collector and where appropriate with another sheet product or second sheet. It is most preferred that the extraction be conducted after lamination has been completed.

Although one or more of the sheets used in forming the present sheet product and electrode product can be subjected to extraction processing prior to being united with other sheets to form the final (sheet or electrode) product, it is preferred to conduct extraction subsequent to forming the final product, most preferably subsequent to forming the electrode product. It is believed, although not meant to be a limitation on the claimed invention, that the presence of plasticizer provides a further aid in having the resultant electrode product be a substantially fused and unitary structure. The plasticizer provides a conduit which permits the polymers of each sheet to migrate at the sheets interface to provide a resultant product of an integral, unitary polymer matrix.

The procedure for extraction of the plasticizer component from each sheet is well known and is not meant to form a part of the present invention, per se. The procedure shall be discussed herein with respect to extraction of plasticizer from an electrode product which is the preferred embodiment. The solvent(s) and extraction conditions should be chosen so that the polyolefin and filler of each second sheet and the polyethylene and electrically conductive and electrochemically active particulate material of each first sheet are essentially insoluble. Where the plasticizer used to form each sheet is the same material or has substantially the same solubility characteristics, one can use a single stage extraction. However, if plasticizer components of different solubility characteristics are used (either as part of forming a single sheet or for different sheets) a multiple stage extraction may be required. Numerous solvents as described above can be used to cause removal of the plasticizer with the particular solvent(s) depending upon the particular plasticizer material to be removed.

The electrode products are substantially unitary structures which is believed due to the nature of the materials used, the requirement to have a plasticizer present in at least some of the sheets used to form the electrode product and the forces the components undergo during formation of the product. The electrode product has substantially no distinct interface boundary between the sheet components used in its formation and can be viewed as a gradient change across the electrode product's thickness or cross-section with the outer portion being an inert (with respect to the cathodic and anodic electrochemically active materials, the electrolyte and its carrier) portion and the inner body being cathodic active. The electrode product has microsporosity throughout its body. The nature of the porosity (average pore size diameter and/or pore volume) may vary from outer to inner portion and is preferably of a larger mean diameter and/or pore volume in the outer, inert portion and of smaller values in the inner, cathodic segment. Void volumes of the final sheet product may range from about 15 volume percent to about 60 volume percent with from about 25 to 45 volume percent being preferred. The sheets void volume is of a microporous character which generally have narrow distribution and are of low mean diameter (i.e. 0.05 to 0.5 µm (microns)) and can be determined by standard mercury intrusion techniques.

The ability to form the unitary structure may be (the theories discussed herein with respect to the structure of the subject electrode product are not meant to be a limitation on the present invention but only a means of describing the present invention so as to be fully understood by those skilled in this art) due to the nature of the polymer used in each sheet component. The close chemical nature of the polymers and their compatibility permits them to readily migrate from one sheet into an adjacent sheet. The plasticizer component(s) also aid in providing a unitary structure. The presence of a plasticizer, especially where it is common to all sheets or at least where there is common solvency, causes the polymer to migrate and intermesh the sheets when they are in contact. Additionally, the movement of the plasticizer as it is being removed from the product further forces the polymers to flow to further enhance the unitary nature of the resultant product.

A sheet product of the present invention can be readily formed from a first sheet and a second sheet wherein each sheet has certain predetermined length and breadth dimensions whereby at least one dimension and preferably both dimensions of the first sheet are less than those of the second sheet so that when the first and second sheets are placed against one another and caused to fuse together it provides a sheet product in which the second sheet extends beyond the dimension of the first sheet with the first sheet substantially centered therebetween. When this initially formed sheet product is used to form an electrode product, it can be used with either a second sheet or another sheet product having a second sheet which has substantially the same dimensions as the second sheet of the initially formed sheet product. The electrode product thus formed will have the first sheet(s) substantially completely encapsulated within second sheets which form the outer major surfaces of the electrode product. Alternately, a second sheet can be wrapped around a first sheet to envelope the first sheet therein. This can be readily done with the present material as they exhibit a high degree of flexibility and mechanical strength. The current collector will be in contact with the first sheet and extend beyond at least one edge of the electrode product as a contact means.

The resultant electrode product of the present invention is a substantially unitary product having flexibility and good tensile properties. It is capable of being readily formed under substantially anhydrous condition which, in turn, provides it with high stability when used in conjunction with a light metal, such as lithium. The resultant electrode product can be placed adjacent to anodic electrodes without the need of a separate insulating element and inhibits dendrite formation between cathodic and anodic elements of the battery. In addition it has been observed that the present electrode product is capable of undergoing a large amount of charge/discharge cycles to aid in providing an effective battery system.

### Test Procedures

The porosity volume percents or void volume percent were calculated for the resultant sheet product by calculating the wet weight minus dry weight divided by the sheet product's geometric wet volume.

Charge/Discharge cycling was performed on cells having the subject sheet using a Princeton Applied Research Model 363 galvanostat. The galvanostat was powered and monitored with an Analog Devices MAC 5000 microcomputer which controlled the current passing through the cell and measured the current passing through the cell and measured the current voltage and charge throughout the cycle.

The electrical conductivity of the resultant sheet products were measured with a Yellow Spring Instrument Conductivity Bridge at 1 KHz by placing a nickel metal clamp on each of the two opposite ends of the specimen to be tested in such a manner as to have a free sample spacing of 1 cm by 1 cm not covered by the clamps. The thickness of the samples were measured. The clamps were connected to a conventional conductivity bridge and the resistance of the samples were measured. To check the accuracy of the measurements, the clamps were adjusted to a spacing of 2 cm by 1 cm and the resistance remeasured.

The porosity volume percents or void volume percent were calculated for the resultant sheet product by calculating the wet weight minus dry weight divided by the sheet product's geometric wet volume.

Charge/Discharge cycling was performed on cells having the subject sheet using a Princeton Applied Research Model 363 galvanostat. The galvanostat was powered and monitored with an Analog Devices MAC 5000 microcomputer which controlled the current passing through the cell and measured the current passing through the cell and measured the current voltage and charge throughout the cycle.

The following examples are given for illustrative purposes only and are not meant to be a limitation on the subject invention, except as made in the claims appended hereto. All parts and percentages are by weight unless otherwise indicated.

### Example 1

Eight parts of high density polyethylene of a weight average molecular weight of 250,000 were mixed with 22 parts of hydrocarbon oil (Sunthene® 255; density of 0.89g/ml, 54 ssu at 98.9°C (210°F), flash point of 198.9°C (390°F)), 19 parts of Shawinigan processed carbon black (acetylene black, 50% compressed density of 2.1 g/cm³, 70 m²/g BET surface area) 3 parts of graphitic carbon (density of 2.1 g/cm³, 5 m²/g BET surface area) and 54 parts of minus 74 µm (200 mesh) V₂O₅ (Cerac). The mixture was placed in a Brabender blender maintained at a temperature of 150°C and mixed for about 5 minutes until steady torque is obtained. A dry nitrogen atmosphere was maintained over the equipment.

A sample of the resultant composition was hot pressed at a pressure of about 1724 kPa (250 psi) at a temperature of 150°C for approximately 10 seconds to produce a uniform sheet of 0.046 cm (18 mil) thickness. The formed sheet was then immersed in cyclohexane for 3 periods of 10 minutes each to yield a microporous sheet having 36 percent void volume substantially uniformly distributed throughout. The composition of the extracted, microporous sheet was 9.5 percent polyethylene, 26.2 percent combined particulate carbon, 64 percent V₂O₅ and less than 1 percent oil. The electronic conductivity of the microporous sheet measured at 22°C and l KH₂ was 0.11 S/cm (ohm⁻¹ cm⁻¹).

### Example 2

A cathodic electrode was formed with the composition of Example 1 above and the electrode was used as part of a Li-V₂O₅ battery cell. Two sheets (approx. 0.0076 cm (3 mils) each) were formed by pressing samples of the composition of Example 1 above at 150°C and 1724 kPa (250 psi). The sheets were placed on each side of an expanded nickel metal screen and the composite subjected to pressure of 1724 kPa (250 psi) at 150°C for approximately 10 seconds to produce a product having the screen embedded therein. An examination of the product showed that the polymeric sheets had formed into a single unitary structure. The product was immersed in cyclohexane bath for 3 periods of 10 minutes each to yield a microporous polymer bonded electrode product. The electrode was then dried at 10 - 20 µm (microns) vacuum and 80°C for 2 hours to remove residual amounts of solvent. The formed cathodic electrode was placed in an Argon atmosphere glove box for assembly as part of a cell with a lithium foil of 1 cm² and 0.0127 cm (5 mil) thickness which had been pressed onto a commercially available expanded nickel metal grid. The two electrodes were placed into a rectangular glass tubing using a commercial polypropylene microporous sheet separator between the electrodes. The cell was filled with 0.5 ml 1.2M LiAsF₆ in 2-methyltetrahydrofuran. The cell was then temporarily sealed with an O ring, taken out of the glove box and permanently glass sealed in a flame.

The cell contained 13.1 mg V₂O₅ which is equivalent to a theoretical capacity of 4.1 mAh (assuming the discharged material is Li₂V₂O₅). The cell was discharged at 1 mA to a cutoff voltage of 1.80 volts and charged at 0.5 mA to a cutoff voltage of 3.0 volts. Capacity utilization at 1 mA was 100% for Cycle #1, 65% for Cycle #3, 37% for Cycle #14 and 36% for Cycle #30. Because of the high theoretical capacity of this V₂O₅ electrode system, the charge density was still very high even at the relatively low capacity percentage obtained.

### Example 3

Eight parts of high density polyethylene of a weight average molecular weight of 250,000 were mixed with 22 parts of hydrocarbon oil (Sunthene® 255; density of 0.89 g/ml, 54 ssu at 98.9°C (210°F), flash point of 198.9°C (390°F)), 19 parts of Shawinigan processed carbon black (acetylene black, 50% compressed, 3 parts graphitic carbon and 65 parts of FeS₂ (Cerac; minus 149 µm (100 mesh), 99.9 percent purity). The mixture was processed in the same manner as described in Example 1 above. The composition of the formed sample of extracted microporous sheet product was: 8 percent polyethylene, 27 percent combined carbons and 65 percent FeS₂. The oil content was negligible. The electronic conductivity of the formed microporous sheet measured at 1 KHZ and 22°C was 0.6 S/cm (ohm⁻¹ cm⁻¹).

A Li-FeS₂ cell was fabricated by the same procedure as described in Example 2 above using the polymer FeS₂ composition of this example. The cell contained 12.9 mg of FeS₂ (active) material, a 0.0127 cm (5 mil) Li foil and approximately 0.5 ml of an electrolyte solution composed of 1 M LiClO₄ in propylene carbonate. The cell was tested by conventional charge-discharge cycling procedure discharged at l mA to a cutoff voltage of 1 volt and charged at 0.25 mA to a voltage limit of 2.5 volts. The cell delivered 7 mAh in Cycle #1, 5.3 mAh in Cycle #4, and 3.9 mAh in Cycle #6. The theoretical capacity based on 2 electrons per iron atom is 5.8 mAh.

### Example 4

The procedure described in Example 3 above was repeated except that the amount of carbon black was reduced to 18 parts and the amount of FeS₂ was increased to 80 parts. The formed extracted sheet was composed of 7 percent polyethylene, 19 percent combined particulate carbons, 73 percent FeS₂ and less than 1 percent oil. The electronic conductivity of the sheet, measured at 1 KHz and 22°C was 0.4 S/cm (ohm⁻¹ cm⁻¹). A FeS₂ electrode was made according to the procedure of Example No. 2 and a Li-FeS₂ cell was fabricated as described in Example No. 3. This cell contained 15.3 mg of FeS₂. The cell was discharged at 1 mA, and charged at 0.5 mA to 2.5 volts. The cell delivered 3.8 mAh to 1.3 volts over 5 charge/discharge cycles.

### Example 5

The procedure of Example 1 was repeated using a mixture of components composed of 9 parts of high-density polyethylene of weight average molecular weight of 250,000, 21 parts hydrocarbon oil (Sunthene® 255) and 104 parts of CuS (Cerac; minus 74 µm (200 mesh), 99.5 percent purity). The formed extracted microporous sheet was composed of about 8 percent polyethylene, 92 percent CuS and residual oil. Conductivity of the sheet, measure at 1 KHz and 22°C was 3.3 S/cm (ohm⁻¹ cm⁻¹).

A Li-CuS cell was fabricated using the material of this Example according to the procedure described in Example 2. The cell which contained 18.6 mg of CuS was discharged at 2 mA to 1.3 V and charged at 1 mA to 2.5 V. The maximum capacity obtained on discharge was 5.4 mAh which is equivalent to 1.03 Li ions per copper atom.

### Example 6

Twelve parts of high density polyethylene of a weight average molecular weight of 250,000 were mixed with 18 parts of hydrocarbon oil (Sunthene® 255; density of 0.89g/ml, 54 ssu at 98.9°C (210°F), flash point of 198.9°C (390°F)), 23 parts of Shawinigan processed carbon black (acetylene black, 50% compressed density of 2.1 g/cm³, 70 m²/g BET surface area), 4 parts of graphitic carbon (density of 2.1 g/cm³, 5 m²/g BET surface area) and 46 parts of minus 74 µm (200 mesh) TiS₂ (average particle size of 15 µm (microns)). The mixture was placed in a Brabender blender maintained at a temperature of 150°C and mixed for about 5 minutes until steady torque is obtained. A dry nitrogen atmosphere was maintained over the equipment.

A sample of the resultant composition was hot pressed at a pressure of about 1724 kPa (250 psi) at a temperature of 150°C for approximately 10 seconds to produce a uniform sheet of 0.046 cm (18 mil) thickness. The formed sheet was then immersed in cyclohexane for 3 periods of 10 minutes each to yield a microporous sheet having 36 percent void volume substantially uniformly distributed throughout. The composition of the extracted, microporous sheet was 16 percent polyethylene, 22.6 percent combined particulate carbon, 61.3 percent TiS₂ and less than 1 percent oil. The electronic conductivity of the microporous sheet measured at 22°C and 1 KHz was 1.0 S/cm (ohm⁻¹ cm⁻¹).

### Example 7

A cathodic electrode was formed with the composition of Example 6 above and the electrode was used as part of a Li-TiS₂ battery cell. Two sheets (approx. 0,00254 cm (1 mil)) were formed by pressing samples of the composition of Example 1 above at 150°C and 1724 kPa (250 psi). The sheets were placed on each side of an expanded nickels metal screen and the composite subjected to pressure of 1724 kPa (250 psi) at 150°C for approximately 10 seconds to produce a product having the screen embedded therein. An examination of the product showed that the polymeric sheets had formed into a single unitary structure. The product was immersed in cyclohexane bath for 3 periods of 10 minutes each to yield a microporous polymer bonded electrode product. The electrode was then dried at 10 - 20 µm (microns)vacuum and 80°C for 2 hours to assure removal of any residual amounts of solvent. The formed cathodic electrode was placed in an Argon atmosphere glove box for assembly as part of a cell with a lithium foil of 1 cm² and 0.0138 cm (15 mils) thick which had been pressed onto a commercially available expanded nickel metal grid. The two electrodes were placed on each side of a commercial polyethylene microporous sheet separator and the assembly placed into a rectangular glass tubing. The cell was filled with 1.2M LiAsF₆ in 2-methyltetrahydrofuran. The cell was then temporarily sealed with an O ring, taken out of the glove box and permanently glass sealed in a flame.

The cell contained 4.2 mg TiS₂ which is equivalent to a theoretical capacity of 1 mAh. The cell was discharged at 2 - 4 mA to a cutoff voltage of 1.5 volts and charged at 1 - 1.8 mA to a cutoff voltage of 2.5 volts. Capacity utilization at 2 mA was 100% for Cycle #1, 78% for Cycle #70, 65% for Cycle #765 and 50% for Cycle #1225. Capacity utilization at 4 mA discharge for cycle #120 was 71%. The above data demonstrates the unexpected superior capacity utilization of the electrode product of the present invention attainable over many cycles. The figure of merit for the subject TiS₂ electrode (the actual number of times that each molecule of TiS₂ has been discharged and charged) (also referred to as turnover number) was 820. When the present figure of merit number is compared to a very low figure of merit value of 8 which is reported in U.S. Patent 4,322,317 one is able to observe the distinct difference of the presently achieved product over that of the referenced product. The coulombic efficiency of the TiS₂ electrode defined as charge in divided by charge out was 100.0±0.3% and the capacity fade rate averaged 0.03% per cycle, which is an exceedingly low value.

### Example 8

Five parts of high density polyethylene of a weight average molecular weight of 3 million were mixed with 23 parts of hydrocarbon oil (Sunthene® 255; density of 0.89 g/ml, 54 ssu at 98.9°C (210°F), flash point of 198.9°C (390°F)), 10 parts of Shawinigan processed carbon black (acetylene black, 50% compressed), 3 parts graphitic carbon and 62 parts of TiS₂ (Cerac; minus 74 µm (200 mesh), average particle size of 15 µm microns). The mixture was processed in the same manner as described in Example 6 above. The composition of the formed sample of extracted microporous sheet product was: 6 percent polyethylene, 16 percent combined carbons and 78 percent TiS₂. The oil content was negligible. The void volume was 45 percent and microporosity was uniform throughout. The electronic conductivity of the formed microporous sheet measured at 1 KHZ and 22°C was 0.5 S/cm (ohm⁻¹ cm⁻¹).

A Li-TiS₂ cell was fabricated by the same procedure as described in Example 2 above using the polymer TiS₂ composition of this example. The cell was tested by conventional charge-discharge cycling procedure discharged at 2 mA to a cutoff voltage of 1.6 volt and charged at 1 mA to a voltage limit of 2.6 volts. The utilization (% of theoretical) of the TiS₂ electrode was 68% at Cycle #1, 60% at Cycle #40 and 40% at Cycle #61.

### Example 9

The procedure of Example 6 was repeated using a mixture of components (same material as Example 6) composed of 8 parts of high-density polyethylene of weight average molecular weight of 250,000, 19 parts hydrocarbon oil, 13 parts carbon black, 4 parts graphitic carbon and 62 parts of TiS₂. The formed extracted microporous sheet was composed of about 9.2 percent polyethylene, 19.5 percent combined carbon, 71.3 percent TiS₂ and neg. oil. Conductivity of the sheet, measure at 1 KHz and 22°C was 0.83 S/cm (ohm⁻¹ cm⁻¹).

A Li-TiS₂ cell was fabricated using the material of this Example according to the procedure described in Example 2. The TiS₂ electrode had a theoretical capacity of 2.83 mAh and the Li capacity was 27 mAh. The cell was discharged at 2 mA/cm² to 1.5 volts and charged at 1 mA at 2.6 volts. It delivered 83% of the theoretical TiS₂ capacity on Cycle No. 4, 70% of theoretical TiS₂ capacity on Cycle No. 108 and 50% of theoretical TiS₂ capacity on Cycle No. 230. The cell cycle life was limited by the Lithium electrode. The coulombic efficiency for the charge discharge cycles was 100.0±0.2%. This number represents the efficiency of the TiS₂ electrode as the Li was in excess.

### Example 10

Nine parts of high density polyethylene of a weight average molecular weight of 250,000 were mixed with 21 parts of hydrocarbon oil (Sunthene® 255; density of 0.89g/ml, 54 ssu at 98.9°C (210°F), flash point of 198.9°C (390°F)), 14 parts of Shawinigan processed carbon black (acetylene black, 50% compressed density of 2.1 g/cm³, 70 m²/g BET surface area), 1 part of graphitic carbon (density of 2.1 g/cm³, 5 m²/g BET surface area) and 55 parts of minus 74 µm (200 mesh) TiS₂ (average particle size of 15 µm (microns), battery grade). The mixture was placed in a Brabender blender maintained at a temperature of 150°C and mixed for about 5 minutes until steady torque is obtained. A dry nitrogen atmosphere was maintained over the equipment.

A sample of the resultant composition was hot pressed at a pressure of about 1724 kPa (250 psi) at a temperature of 150°C for approximately 10 seconds to produce a uniform sheet of 0.046 cm (18 mil) thickness. The formed sheet was then immersed in cyclohexane for 3 periods of 10 minutes each to yield a microporous sheet having 40 percent void volume substantially uniformly distributed throughout. The composition of the extracted, microporous sheet was 11 percent polyethylene, 19 percent combined particulate carbon, 70 percent TiS₂ and negligible amount of oil. The electronic conductivity of the microporous sheet measured at 22°C and 1 KHz was 0.42 S/cm (ohm⁻¹ cm⁻¹).

A Li-TiS₂ battery cell was built using the above material. 493 parts of the sheet product formed above was hot pressed onto a 20 cm² expanded nickel grid to produce a TiS₂ cathodic electrode product. A spirally wound cell was constructed in an Argone atmosphere glove box by placing the cathodic electrode adjacent one side of a commercial microporous separator sheet and an anodic electrode formed from 190 parts of Li foil pressed onto an expanded nickel grid adjacent the opposite side of the separator sheet. The assembly was jelly roll wound and placed into a cylindrical glass tube. The tube was filled with a solution of 1.2 M LiAF₆ in 2-methyltetrahydrofuran and sealed to form the cell. The cell was discharged at 60 mA and charged at 30 mA between voltage limits of 1.6 and 2.6 volts. The capacity utilization of the 82.5 mAh TiS₂ electrode was 87% at Cycle #10; 83% at Cycle #70; 80% at Cycle #100 and 50% at Cycle #165.

### Example 11

(a) 8 parts of a high density polyethylene having a weight average molecular weight of 250,000 were mixed with 21 parts of hydrocarbon oil (Sunthene® 255: density of 0.89 g/ml, 54 ssu at 98.9°C (210°F), flash point of 198.9°C (390°F)and 84 parts of a commercially available battery grade titanium disulfide having an average particle size of 10 µm (microns). The mixture was compounded in a Brabender maintained at 150°C for two 10 minute periods. The resultant homogeneous mixture was pressed into flat sheets using a flat plate press (Wabash) maintained at 150°C at a pressure of 2758 kPa 400 psi to obtain sheets of 0.037 cm (14.5 mils). thickness.
(b) An expanded Ni screen 0.0127 cm (5 mils). thick) having a nickel tab attached to one end was placed adjacent to a sheet formed in the manner described in paragraph (a) above. The composite was pressed using a flat plate press (Wabash) maintained at 150°C and 3447 kPa (500 psi) pressure. The pressed product was observed to be a unitary structure having the screen embedded within. The pressed sheet was then immersed in cyclohexane bath for 15 minutes and then vacuum dried. The porosity of the sheet was about 40 percent. This sheet was then immersed in a 38 vol. percent solution of hydrocarbon oil (Sunthene® 255) in cyclohexane to have a fixed amount of oil absorbed by the sheet. The sheet was removed from the solution and dried to permit the cyclohexane to evaporate. The electrode was pressed once more to remove the voids, then the oil was removed by extraction as described above and finally dried.

The resultant electrode was composed of 8.7 weight percent polyethylene and 91.3 weight percent titanium disulfide having a pore volume of 20 vol. percent.

### Example 12

The electrode of Example 11 above was placed in an Argon atmosphere glove box and used to fabricate a spirally-wound Li-TiS₂ battery cell. The cell was formed from lithium foil, commercial microporous polypropylene separator, the electrode of Example I and 0.0127 cm (5 mil) of electrolyte solution composed of 1.5 M LiAsF₆ in 2-methyl tetrahydrofuran.

The solid components of the cell will fit into a standard AA size cell with the electrolyte being in excess. The cell was sealed in glass tubing, evacuated and then filled with the electrolyte solution through a Ni tube which was subsequently sealed. The cell contained 1.14 Ah of TiS₂ and 1.80 Ah of Li.

The cell was discharged to 1.6 volts and charged to 2.6 volts. The cell delivered 0.96 Ah (84% of theoretical) (l mA/cm²) at 190 mA in cycle No. 7 and 0.68 Ah (63% of theoretical) at the same rate at cycle No. 71.

### Example 13

Sheets were formed in the same manner as described in Example 11 above except that 8 parts of polyethylene were mixed with 19 parts of hydrocarbon oil and 89 parts of TiS₂. Two sheets were positioned on each side of a nickel expanded screen and pressed into a unitary sheet and then subjected to two fresh baths of cyclohexane to extract substantially all of the oil. The electrode sheet was then immersed in a 38 vol. percent solution of hydrocarbon oil (Sunthene® 255) in cyclohexane to allow sufficient oil pick-up to form the desired product void volume. The sheet was dried and pressed to remove excess voids as described in Example I above and then the oil contained in the sheet is removed by extraction with final drying.

A small rectangular glass sealed cell was built using the above electrode with lithium foil and an electrolyte solution composed of 1.2M LiAsF₆ in 2-methyl tetrahydrofuran. The cell was discharged to 1.6 V and charged to 2.6 V. The utilization of the TiS₂ electrode (% of theoretical) was 90 percent for cycle No. 3 (1 mA/cm²); 81 percent for cycle No. 28 (1.5 mA/cm²) and 75% for cycle No. 65 (1.5 mA/cm²). The charge density of this electrode was 0.9 mAh/cm² 0.00254 cm (mil). The fade rate was very low.

### Example 14

This example is made for comparative purposes.
A. A sheet product was formed in the same manner as described in Example 13 above except that only the initial extraction step was performed. The resultant electrode sheet was composed of 8.3 weight percent polyethylene and 91.7 weight percent TiS₂ and had a void volume of 36 percent.
   The electrode sheet was used as the cathode component of a rectangular cell fabricated in the same manner as described in Example 13. The charge density of the TiS₂ electrode was about 0.7 mAh/cm² 0.00254 cm (mil). The cell was discharged (at 1 mA/cm²) to 1.6 volts and charged to 2.6 volts. The cell delivered 92 percent of capacity at cycle No. 2 but only 60 percent of capacity at cycle No. 45. The observed large cell capacity fade was due to deterioration of the TiS₂ cathode as the lithium and electrolyte were present in excess.
B. 4 parts of polyethylene having a weight average molecular weight of 5 x 10⁶ were mixed with 20 parts of hydrocarbon oil (Sunthene® 255) and 105 parts of commercially available battery grade TiS₂ having an average particle size of 10 µm (microns). The mixture was processed into an electrode in the same manner as described in Example 11 above. The resultant electrode was used to form a Li-TiS₂ rectangular cell as described in Example 13 above.

The cell was discharged at 1 mA/cm² to 1.6 volts and charged at 0.35 mA/cm² to 2.6 volts. The TiS₂ capacity utilization was 95% for cycle No. 2; 71% at cycle No. 10; and 60% at cycle No. 18. The large capacity fade was due to TiS₂ electrode deterioration as lithium and electrolyte were in excess.

### Example 15

A. A first or active sheet was formed by mixing 8 parts of high density polyethylene of a weight average molecular weight of 250,000 with 19 parts of low aromatic petroleum hydrocarbon oil (Sunthene® 255; density of 0.89 g/ml, 54 ssu at 98.9°C (210°F), flash point of 198.9°C (390°F), 13 parts of Shawinigian processed carbon black (50% compressed acetylene black, 45 nm (millimicron), apparent density of 0.1 g/cm³, 70 m²/g BET surface area) 4 parts graphitic carbon and 62 parts of a commercial battery grade TiS₂ (average particle size of 15 µm (microns)). The mixture was placed in a Brabender blender maintained at a temperature of 150°C and mixed for about 5 minutes until steady torque is obtained. A nitrogen atmosphere was maintained over the equipment.
   A sample of the resultant composition was hot pressed at a pressure of about 1724 kPa (250 psi) at a temperature of 150°C for approximately 10 seconds to produce a uniform sheet of about 0.0051 cm (2 mils) thickness. The electronic conductivity of samples of the formed sheet, measured at 22°C and 1KHz, was 0.8 S/cm (ohm⁻¹ cm⁻¹).
   Two samples of the sheet formed above (each 0.7 cm x 1.5 cm x 0.0056 cm (2.2 mil) thick) were placed on each side of an expanded nickel metal screen and the composite was pressed at 150°C and about 1034 kPa (150 psi) to form a sheet 0.0127 cm (5 mils). thick with only a single nickel wire welded to the screen left exposed.
B. A second or passive sheet was formed by mixing 15 parts high density polyethylene of a weight average molecular weight of 250,000, 49 parts of TiO₂ (BET surface area of 50 m²/g), 25 parts of a low aromatic petroleum hydrocarbon oil (Sunthene® 255) and 0.1 part of commercial antioxidant (Santonox®). The mixture was placed in a Brabender blender maintained at 150°C and mixed for about 6 minutes. A sample of the formed composition was pressed between two sheets of Mylar at 150°C and 1724 kPa (250 psi) to give a 0.0051 cm (2 mil). thick sheet. The electronic conductivity of this sheet was measured at 22°C and 1 KHz and determined to be negligable as it was not registerable at the lowest level of the bridge (4 x 10⁻⁶ S/cm (ohm^{⁻}¹ cm⁻¹)).

### Example 16

Two pieces of the passive sheet formed according to Example 15 B, above, were placed on each major surface of the active TiS₂ sheet formed according to Example 15 A, above, in a manner to have the passive sheets extend beyond the edges of the active sheet by 2 millimeters on all edges. The composite was pressed at 150°C and about 172 - 345 kPa (25 - 50 psi) for about 1 minute. The resultant sheet product was immersed in cyclohexane bath for 3 periods of 10 minutes each to yield a microporous sheet. The resultant electrode product was examined and had a fused unitary structure about 0.024 cm (9.5 mils) thick with a surface composition of 23 percent polyethylene, 76 percent TiO₂, less than 1 percent oil and approximately 45 percent porosity. The two surfaces were separated by an inner core having a composition of 9.2 percent polyethylene, 19.5 percent combined carbon, 71 percent TiS₂ and less than 1 percent oil with 36 percent porosity and having the nickel screen embedded therein.

### Example 17

The electrode product of Example 16 was placed into an Argon atmosphere glove box for assembly as part of a cell with a lithium foil of 1 cm² and 0.0051 cm (2 mil) thickness supported on an expanded nickel screen which had a nickel wire extending therefrom. The electrode product and the lithium foil were positioned adjacent one another and placed into a rectangular glass container. The container was filled with a solution of 1.2 M LiAsF₆ in 2-methyl tetrahydrofuran and sealed with an O ring seal, taken out of the Argon box and permanently heat sealed leaving the nickel wires exposed to produce a Li-TiS₂ cell. The cell was discharged at 2 mA to a cutoff voltage of 1.5 volts and was charged at 1 mA to an upper voltage of 2.5 volts. The utilization of the 1.7 mAh (TiS₂ limited) cell was 79% at Cycle No. 5, 73% at Cycle No. 100 and 50% at Cycle No. 160.

### Example 18

A cathodic sheet product was formed by placing two 0.01 cm (4 mil.) sheets, formed from the same composition as described in Example 15A above, on each side of an expanded nickel screen and then pressing the composite as described in Example 15 A (first sheet). A 0.0051 cm (2 mil) second sheet formed from the composition of Example 15 B was folded around the first sheet in a manner to leave 2 mm excess of the second sheet on all edges. Light pressure of about 172 kPa (25 psi) was applied with a plate press at 150°C to effect fusing of the sheets and the edge portions to themselves. The sheet product was immersed in a cyclohexane bath for three 10 minute periods to extract the oil component. The resultant cathodic sheet product was put into an Argon atmosphere glove box. A Li-TiS₂ cell was fabricated by spirally winding the formed cathodic sheet product directly with a 2 x 7 cm. 0.0127 cm (5 mil.) lithium foil which is supported on an expanded nickel screen. The jelly roll electrodes were placed in a glass tube container which was then filled with 865 mg of an electrolyte solution composed of 1.2 M LiAsF₆ in tetrahydrofuran. The container was sealed with an O ring seal, removed from the Argon box and permanently glass sealed.

This example represents the ease and ability of the subject cathodic sheet product to be readily manipulated and formed into a complex configuration and to form a cell without the utilization of additional components such as a separator membrane or the like. The cell was cycled between 2.5 and 1.5 volts at a discharge current of 70 mA and a charging current of 30 mA. The utilization of the 100 mAh (TiS₂ limited) cell was 72 percent after six cycles and 43 percent after 139 cycles.

### Example 19

An inert portion of a cathodic electrode was formed from an initial composition comprising 12 parts of polyethylene (MW_{w} = 250,000), 31 parts hydrocarbon oil (Sunthene® 255), 23 parts silica (Hisil® 233; BET surface area of 110 m²/g) and 0.1 part antioxidant (Santonox®). A sheet 0.0051 cm (2 mil) thick) formed from this composition was folded around and fused to an active sheet of Example 15 A and then treated with cyclohexane, all in the manner described in Example 18 above, to provide a unitary electrode product in which the active component is sealed in and forms the core of the product. A Li-TiS₂ cell was formed using the cathodic electrode product and 7 mg 0.0127 cm (5 mil.) lithium foil in the manner described in Example 17, above. The cell was cycled with a discharge to 1.5 volts at 2 mA and charged to 2.5 volts at 1 mA. The capacity utilization of the theoretical 2.9 mAh (TiS₂ limited) was 76 percent after the sixth Cycle, 65 percent after the one hundredth Cycle and 50 percent at Cycle No. 200.

### Example 20

A cathodic sheet product was formed by a core having a composition comprising a mixture of 5 parts of high density polyethylene having a weight average molecular weight of 3 million, 23 parts of hydrocarbon oil (Sunthene® 255), 10 parts of Shawinigian processed carbon black (45 nm (millimicron), apparent density of 0.1 g/cm³/ 70 m²/g BET surface area), 3 parts graphitic carbon and 65 parts of a commercial battery grade TiS₂ (average particle size of 15 µm (microns)). This composition was formed into a sheet at 165°C and 1724 kPa (250 psi). The sheet was then encompassed in a passive composition of Example 15 B and readily fused into a unitary structure which was treated with cyclohexane in the manner described in Example 16. The core of the product was 6 percent polyethylene, 16 percent combined carbon, and 78 percent TiS₂ and had about 45 percent porosity. The surfaces of the product was 23 percent polyethylene, 76 percent TiO₂ and less than 1 percent oil with about 45 percent porosity.

The above electrode product was used to form a Li-TiS₂ cell in the same manner as described in Example 17, above. The cell was cycled between 2.6 and 1.6 volts at a discharge/charge current of 2 mA/1 mA respectively. The utilization of the 3 mAh (TiS₂ limited) cell was 61 percent after Cycle 5 and 54 percent after Cycle 35.

### Example 21

The procedure of Example 15 A was repeated except that the TiS₂ was replaced with 55 parts of vanadium oxide (V₂O₅, 74 µm (200 mesh), 99.9 percent pure). The resultant sheet had a conductivity of 0.4 S/cm (ohms⁻¹ cm⁻¹). An 0.02 cm (8 mil.) thick V₂O₅ active sheet was formed having a nickel screen embedded therein.

A cathodic electrode was formed according to the procedure of Example V using the above V₂O₅ active sheet and the sheet material of Example 15 B and was treated with cyclohexane as described in Example 16.

The cathodic electrode described above was placed against a 0.0127 cm (5 mil). lithium foil and formed into a Li-V₂O₅ cell by the procedure described in Example 17, disclosed above. The cell has a theoretical V₂O₅ limited capacity of 5.5 mAh (based on the reaction 2Li + V₂O₅ Li₂V₂O₅). The cell was discharged to 2V at l mA and charged at 0.5 mA to 3V. Capacity utilization (% of theoretical) was 100 at Cycle No. 1, 82 at Cycle No. 3, 49 at Cycle No. 5 and 40 at Cycle No. 25.

## Claims

1. A self-standing microporous sheet product having first and second major surfaces and a thickness of less than 0.127 cm (50 mils) comprising with the proviso that no fibrillated polymer is present
(a) from 70 - 98 weight percent of particulate material selected from electrochemically active chalcogenide and electrically conductive material and mixtures thereof alone or together with other metals; and
(b) from about 2 - 30 weight percent of a high-density polyethylene having a weight average molecular weight of from about 150 000 to about 5 000 000; and
(c) from 0 to 5 weight percent of an organic plasticizer for said polyethylene;
said sheet having a void volume of at least about 10 volume percent and being capable of exhibiting conductivity of at least about 0.1 S/cm (reciprocal ohm/cm) when placed in an electrical circuit.

2. The sheet product of Claim 1 wherein the particulate material is TiS₂ and/or the weight average molecular weight of the polyethylene ranges from 200 000 to 500 000.

3. The sheet product of Claims 1 or 2 wherein up to about 30 weight percent of said particulate material is composed of a conductive carbon black having an average particle size of from about 1 to 100 nm and the remainder of said particulate material is selected from at least one metal chalcogenide having a metal selected from titanium, zirconium, hafnium, niobium, manganese, copper, iron, tantalum, chromium, vanadium or mixtures thereof.

4. The sheet product of Claim 3 wherein the at least one metal chalcogenide or the major chalcogenide is TiS₂ having an average particulate size of 30 µm or less.

5. The sheet product of Claims 1 or 2 wherein
(a) said particulate is present in from about 90 to 94 weight percent and is composed of a metal chalcogenide having an average particle size of less than about 30 µm;
(b) said polyethylene is present in from about 6 to 10 weight percent and has a weight average molecular weight of from about 200 000 to 500 000; and
(c) said organic plasticizer is present in from 0 to 2 weight percent;
said sheet product being substantially homogeneous, microporous and having a void volume of from 15 to 25 weight percent and being capable of exhibiting conductivity of at least 0.15 S/cm (reciprocal ohm/cm).

6. The sheet product of any of Claims 1 to 5 which forms a unitary microporous structure and wherein said first major surface of the sheet product is covered with a substantially homogeneous composition composed of from about 7 to 50 weight percent of a polyolefin having a weight average molecular weight of at least about 100 000, from about 50 to 93 weight percent of a filler having a mean particle size of from about 0.01 to 10 µm and is inert with respect to a battery system in which the sheet product is to be used and from 0 to about 15 weight percent of an organic plasticizer for said polyolefin.

7. The sheet product of Claim 6 wherein the particulate material has a mean particle size of about 25 µm or less and is composed of from about 70 to 100 weight percent of at least one metal chalcogenide of a metal selected from titanium, zirconium, hafnium, niobium, tantalum, vanadium and mixtures thereof and from 0 to about 30 weight percent of a conductive carbon black.

8. The sheet product of Claim 7 wherein the metal chalcogenide is TiS₂.

9. The sheet product of any of Claims 6 to 8 wherein the polyethylene is present in 2 - 15 weight percent and has a weight average molecular weight of from about 200 000 to 500 000, the particulate material is present in 85 - 98 weight percent and is at least about 70 weight percent titanium disulfide, the plasticizer for the polyethylene is present in from 0 - 5 weight percent and is selected from a petroleum oil, and wherein the composition covering the first major surface is composed of polyolefin having a weight average molecular weight of from 150 000 to 500 000, an inert filler is selected from titania, alumina, silica and polyolefin plasticizer composed of a petroleum oil.

10. The sheet product of claim 9 wherein the particulate material is TiS₂.

11. An electrode suitable for use in a non-aqueous battery comprising at least one sheet product of Claims 1 - 5 and a current collector composed of a conductive material, said collector being in intimate contact with each of said at least one sheet product.

12. An electrode suitable for use in a non-aqueous battery comprising at least one sheet product of Claims 6 to 10 and a current collector composed of a conductive material, said current collector being in intimate contact with the second major surface of each of said at least one sheet product.

13. A primary or secondary battery comprising at least one pair of electrodes of opposite polarity and an electrolyte, wherein the anodic electrode is composed of an alkali metal or alloy thereof and the cathodic electrode consists essentially of the electrode product of Claim 11 or 12 comprising the sheet product of claims 1 to 5 or claims 6 to 10.

14. A process for forming a microporous sheet product suitable for use as a cathodic electrode comprising;
(a) forming a substantially uniform mixture comprising from about 3 to 30 volume percent of polyethylene having a weight average molecular weight of from about 200 000 to about 500 000, from about 27 to about 76 volume percent of particulate metal chalcogenide material having an average particle size of less than about 20 µm and from about 20 to 70 volume percent of plasticizer for the polyethylene;
(b) shaping the substantially uniform mixture into an initial sheet;
(c) removing a portion of said plasticizer from the initial sheet to form a porous intermediate sheet having from 10 to 22 volume percent of plasticizer;
(d) compressing the intermediate sheet to provide a substantially nonporous compressed intermediate sheet; and
(e) removing substantially all of the plasticizer from said compressed intermediate sheet to form a microporous sheet product.

15. The process of claim 14, wherein the uniform mixture of step (a) comprises 12 to 20 volume percent of polyethylene, from about 40 to 55 volume percent of the chalcogenide and 48 to 25 volume percent of plasticizer.

16. The process of claim 14 or claim 15 wherein the chalcogenide is TiS₂.

## Patentansprüche

1. Selbststehendes mikroporöses Schichtprodukt mit ersten und zweiten Hauptoberflächen und einer Dicke von weniger als 0,127 cm (50 mil), die mit der Maßgabe, daß kein fibriliertes Polymer vorhanden ist,
(a) 70 - 98 Gew.-% teilchenförmiges Material ausgewählt aus elektrochemisch aktivem Chalcogenid und elektrisch leitfähigem Material und Mischungen derselben allein oder zusammen mit anderen Metallen,
(b) etwa 2 - 30 Gew.-% Polyethylen hoher Dichte mit einem durchschnittlichen gewichtsmäßigen Molekulargewicht von etwa 150 000 bis etwa 5 000 000 und
(c) 0 - 5 Gew.-% organischen Weichmacher für das Polyethylen umfaßt,
wobei die Schicht ein Hohlvolumen von mindestens etwa 10 Vol.-% aufweist und in der Lage ist, eine Leitfähigkeit von mindestens etwa 0,1 S/cm (reziproke ohm/cm) zu zeigen, wenn sie in einem Stromkreis angeordnet ist.

2. Schichtprodukt nach Anspruch 1, bei dem das teilchenförmige Material TiS₂ ist und/oder das durchschnittliche gewichtsmäßige Molekulargewicht des Polyethylens im Bereich von 200 000 bis 500 000 liegt.

3. Schichtprodukt nach den Ansprüchen 1 oder 2, bei dem bis zu etwa 30 Gew.-% des teilchenförmigen Materials aus leitfähigem Ruß mit einer durchschnittlichen Teilchengröße von etwa 1 bis 100 nm zusammengesetzt ist, wobei der Rest des teilchenförmigen Materials ausgewählt ist aus mindestens einem Metallchalcogenid mit einem Metall ausgewählt aus Titan, Zirkonium, Hafnium, Niob, Mangan, Kupfer, Eisen, Tantal, Chrom, Vanadium oder Mischungen derselben.

4. Schichtprodukt nach Anspruch 3, bei dem das mindestens eine Metallchalcogenid oder das Hauptchalcogenid TiS₂ mit einer durchschnittlichen Teilchengröße von 3 µm oder weniger ist.

5. Schichtprodukt nach den Ansprüchen 1 oder 2, bei dem
(a) das teilchenchenförmige Material in einer Menge von etwa 90 bis 94 Gew.-% vorhanden sind und aus Metallchalcogenid mit einer durchschnittlichen Teilchengröße von weniger als etwa 30 µm besteht,
(b) das Polyethylen in einer Menge von etwa 6 bis 10 Gew.-% vorhanden ist und ein durchschnittliches gewichtsmäßiges Molekulargewicht von etwa 200 000 bis 500 000 aufweist und
(c) der organische Weichmacher in einer Menge von 0 bis 2 Gew.-% vorhanden ist,
wobei das Schichtprodukt im wesentlichen homogen und mikroporös ist, ein Hohlvolumen von 15 bis 25 Gew.-% aufweist und in der Lage ist, Leitfähigkeit von mindestens 0,15 S/cm (reziproke ohm/cm) zu zeigen.

6. Schichtprodukt nach einem der Ansprüche 1 bis 5, das eine einheitliche mikroporöse Struktur bildet, wobei die erste Hauptoberfläche des Schichtprodukts mit einer im wesentlichen homogenen Zusammensetzung bedeckt ist, die aus etwa 7 bis 50 Gew.-% Polyolefin mit einem durchschnittlichen gewichtsmäßigen Molekulargewicht von mindestens etwa 100 000, etwa 50 bis 93 Gew.-% Füllstoff, der eine durchschnittlichen Teilchengröße von etwa 0,01 bis 10 µm aufweist und in bezug auf ein Batteriesystem inert ist, in dem das Schichtprodukt verwendet werden soll, und 0 bis 15 Gew.-% organischen weichmacher für das Polyolefin besteht.

7. Schichtprodukt nach Anspruch 6, bei dem das teilchenförmige Material eine durchschnittliche Teilchengröße von etwa 25 µm oder weniger aufweist und aus etwa 70 bis 100 Gew.-% mindestens eines Metallchalcogenids eines Metalls ausgewählt aus Titan, Zirkonium, Hafnium, Niob, Tantal, Vanadium und Mischungen derselben und 0 bis etwa 30 Gew. -% leitfähigem Ruß besteht.

8. Schichtprodukt nach Anspruch 7, bei dem das Metallchalcogenid TiS₂ ist.

9. Schichtprodukt nach einem der Ansprüche 6 bis 8, bei dem das Polyethylen in einer Menge von 2 - 15 Gew.-% vorhanden ist und ein durchschnittliches gewichtsmäßiges Molekulargewicht von etwa 200 000 bis 500 000 aufweist, das teilchenförmige Material in einer Menge von 85 - 98 Gew.-% vorhanden ist und zumindestens etwa 70 Gew.-% Titandisulfid ist, der Weichmacher für das Polyethylen in einer Menge von 0 - 5 Gew.-% vorhanden ist und ausgewählt ist aus Mineralöl, und bei dem die Zusammensetzung, die die erste Hauptoberfläche bedeckt, aus Polyolefin mit einem durchschnittlichen gewichtsmäßigem Molekulargewicht von 150 000 bis 500 000, inertem Füllstoff ausgewählt aus Titandioxid, Aluminiumoxid, Siliciumoxid und Polyolefinweichmacher bestehend aus einem Mineralöl zusammengesetzt ist.

10. Schichtprodukt nach Anspruch 9, bei dem das teilchenförmige Material TiS₂ ist.

11. Elektrode, die für die Verwendung in einer nicht-wäßrigen Batterie geeignet ist, die mindestens ein Schichtprodukt der Ansprüche 1 bis 5 und einen Stromkollektor aus leitfähigem Material umfaßt, wobei der Kollektor in innigem Kontakt mit jedem des mindestens einen Schichtprodukts steht.

12. Elektrode, die für die Verwendung in einer nicht-wäßrigen Batterie geeignet ist, die mindestens ein Schichtprodukt gemäß den Ansprüchen 6 bis 10 und einen Stromkollektor aus leitfähigem Material umfaßt, wobei der Stromkollektor in innigen Kontakt mit der zweiten Hauptoberfläche von jedem des mindestens einen Schichtprodukts steht.

13. Primär- oder Sekundärbatterie, die mindestens ein Paar von Elektroden entgegengesetzter Polarität und einen Elektrolyten umfaßt, wobei die anodische Elektrode aus einem Alkalimetall oder einer Legierung desselben besteht und die kathodische Elektrode im wesentlichen aus dem Elektrodenprodukt gemäß Anspruch 11 oder 12 besteht, das ein Schichtprodukt gemäß den Ansprüchen 1 bis 5 oder 6 bis 10 umfaßt.

14. Verfahren zur Bildung eines mikroporösen Schichtprodukts, das für die Verwendung als kathodische Elektrode geeignet ist, bei dem:
(a) eine im wesentlicen gleichmäßige Mischung gebildet wird, die etwa 3 bis 30 Vol.-% Polyethylen mit einem durchschnittlichen gewichtsmäßigen Molekulargewicht von etwa 200 000 bis etwa 500 000, etwa 27 bis etwa 76 Vol.-% teilchenförmiges Metallchalcogenidmaterial mit einer durchschnittlichen Teilchengröße von weniger als etwa 20 µm und etwa 20 bis 70 Vol.-% Weichmacher für das Polyethylen umfaßt,
(b) die im wesentlichen gleichmäßige Mischung zu einer Anfangsschicht geformt wird,
(c) ein Teil des Weichmachers aus der Anfangsschicht entfernt wird, um eine poröse intermediäre Schicht mit 10 bis 22 Vol.-% Weichmacher zu bilden,
(d) die intermediäre Schicht zusammengepreßt wird, um eine im wesentlichen nicht-poröse, zusammengepreßte intermediäre Schicht zu liefern, und
(e) im wesentlichen der ganze Weichmacher aus der zusammengepreßten intermediären Schicht entfernt wird, um ein mikroporöses Schichtprodukt zu bilden.

15. Verfahren nach Anspruch 14, bei dem die gleichförmige Mischung aus Stufe (a) 12 bis 20 Vol.-% Polyethylen, etwa 40 bis 55 Vol.-% des Chalcogenids und 48 bis 25 Vol.-% Weichmacher umfaßt.

16. Verfahren nach Anspruch 14 oder Anspruch 15, bei dem das Chalcogenid TiS₂ ist.

## Revendications

1. Produit microporeux en feuille auto-porteur présentant une première et une seconde surfaces principales et ayant une épaisseur inférieure à 0,127 cm (50 millièmes de pouce) comprenant, à condition qu'aucun polymère sous forme de fibre ne soit présent,
(a) de 70 et 98 % en poids d'une matière particulaire choisie parmi un chalcogénure électrochimiquement actif et un matériau électriquement conducteur et des mélanges de ceux-ci seul ou ensemble avec d'autres métaux ; et
(b) d'environ 2 à 30 % en poids de polyéthylène haute densité ayant une masse moléculaire moyenne comprise entre environ 150 000 et environ 5 000 000 ; et
(c) de 0 à 5 % en poids d'un plastifiant organique pour ledit polyéthylène ;
ladite feuille ayant un volume de vides d'au moins environ 10 % en volume et étant susceptible de présenter une conductivité d'au moins environ 0,1 S/cm (l'inverse de ohm/cm) lorsquelle est placée dans un circuit électrique.

2. Produit en feuille selon la revendication 1, dans lequel la matière particulaire est le TiS₂ et/ou la masse moléculaire moyenne du polyéthylène se situe entre 200 000 et 500 000.

3. Produit en feuille selon la revendication 1 ou 2, dans lequel jusqu'à environ 30 % en poids de cette matière particulaire sont constitués de noir de carbone conducteur ayant une taille moyenne de particules comprise entre 1 et 100 nm et le reste de ladite matière particulaire étant choisi parmi au moins un chalcogénure métallique comprenant un métal choisi parmi le titane, le zirconium, l'hafnium, le niobium, le manganèse, le cuivre, le fer, le tantale, le chrome, le vanadium ou des mélanges de ceux-ci.

4. Produit en feuille selon la revendication 3, dans lequel un au moins du chalcogénure métallique ou le chalcogénure principal est le TisS₂ ayant une taille de particules de 30 micromètres ou moins.

5. Produit en feuille selon la revendication 1 ou 2, dans lequel
(a) lesdites particules sont présentes à raison d'environ 90 à 94 % en poids et sont constituées d'un chalcogénure métallique dont la taille moyenne des particules est inférieure à environ 30 micromètres ;
(b) ledit polyéthylène est présent à raison d'environ 90 à 94 % en poids et a une masse moléculaire moyenne d'environ 200 000 et 500 000 ;
(c) ledit plastifiant organique est présent à raison de 0 à 2 % en poids ;
ledit produit en feuille étant pratiquement homogène, microporeux avec un volume de vide compris entre 15 et 25 % et étant susceptible de présenter une conductivité d'au moins 0,15 S/cm (l'inverse de Ohm/cm)

6. Produit en feuille selon l'une quelconque des revendications 1 à 5, qui forme une structure microporeuse unitaire et dans lequel ladite première surface principale du produit en feuille est couverte d'une composition pratiquement homogène contenant d'environ 7 à 50 % en poids d'une polyoléfine dont la masse moléculaire moyenne est d'au moins environ 100 000, d'environ 50 à 93 % en poids d'une charge ayant une taille de particules comprise entre environ 0,01 et 10 micromètres et qui est inerte par rapport à un système de batterie dans lequel le produit en feuille doit être utilisé et d'environ 0 à 15 % d'un plastifiant organique pour ladite polyoléfine.

7. Produit en feuille selon la revendication 6, dans lequel la matière particulaire comprend des particules dont la taille moyenne est d'environ 25 micromètres ou moins et est composée d'au moins un chalcogénure métallique d'un métal choisi parmi le titane, le zirconimum, l'hafnium, le niobium, le tantale, le vanadium et des mélanges de ceux-ci et de 0 à environ 30 % en poids d'un noir de carbone conducteur.

8. Produit en feuille selon la revendication 7, dans lequel le chalcogénure métallique est le TiS₂.

9. Produit en feuille selon l'une quelconque des revendications 6 à 8, dans lequel le polyéthylène est présent à raison de 2 à 15 % en poids et a une masse moléculaire moyenne comprise entre environ 200000 et 500000, le matériau particulaire est présent à raison de 85 à 98 % en poids et contient au moins environ 70 % en poids de disulfure de titane, le plastifiant du polyéthylène est présent à raison de 0 à 5 % en poids et est choisi à partir d'une huile de pétrole, et dans lequel la composition recouvrant la première surface principale est composée de polyoléfine ayant une masse moléculaire moyenne comprise entre 150000 et 500000, la charge inerte étant choisie parmi le titane, l'alumine, la silice et le plastifiant de polyoléfine composé d'une huile de pétrole.

10. Produit en feuille selon la revendication 9 dans lequel le matériau particulaire est le TiS₂.

11. Electrode utilisable dans une batterie sèche comprenant au moins un produit en feuille selon les revendications 1 à 5 et un collecteur de courant constitué d'un matériau conducteur, ledit collecteur étant en contact intime avec au moins chaque produit en feuille.

12. Electrode utilisable dans une batterie sèche comprenant au moins un produit en feuille selon les revendications 6 à 10 et un collecteur de courant compose d'un matériau conducteur, ledit collecteur de courant étant en contact intime avec la seconde surface principale d'au moins chaque produit en feuille.

13. Batterie primaire ou secondaire comprenant au moins une paire d'électrodes de polarité opposée et un électrolyte dans lequel l'électrode servant d'anode est constituée d'un métal alcalin ou d'un alliage de métal alcalin et l'électrode servant de cathode étant essentiellement constituée par une électrode selon la revendication 11 ou 12 comprenant un produit en feuille selon les revendications 1 à 5 ou 6 à 10.

14. Procédé de préparation d'un produit microporeux en feuille utilisable comme électrode cathodique, consistant :
(a) à préparer un mélange pratiquement uniforme comprenant d'environ 3 à 30 % en volume d'un polyéthylène ayant une masse moléculaire moyenne d'environ 200000 à environ 500000, d'environ 27 à 76 % en volume d'un matériau de chalcogénure métallique particulaire ayant une taille moyenne des particules inférieure à environ 20 micromètres et d'environ 20 à 70 % en volume d'un plastifiant pour le polyéthylène ;
(b) à former le mélange pratiquement uniforme en une feuille initiale ;
(c) à éliminer une partie dudit plastifiant de la feuille initiale pour former une feuille intermédiaire poreuse contenant 10 à 22 % en volume de plastifiant ;
(d) à compresser ladite feuille intermédiaire pour former une feuille intermédiaire comprimée pratiquement non poreuse ; et
(e) à éliminer pratiquement la totalité du plastifiant de ladite feuille intermédiaire comprimée pour former un produit microporeux en feuille.

15. Procédé selon la revendication 14, dans lequel le mélange uniforme de l'étape (a) comprend entre 12 et 20 % en volume de polyéthylène, entre environ 40 et 55 % en volume de chalcogénure et entre 48 et 25 % en volume de plastifiant.

16. Procédé selon la revendication 14 ou 15 dans lequel le chalcogénure est le TiS₂.
